(19) Europäisches Patentamt
European Patent Office
Office européen des brevets

(11) **EP 4 439 146 A1**

(12) **EUROPEAN PATENT APPLICATION**
published in accordance with Art. 153(4) EPC

(43) Date of publication:
**02.10.2024 Bulletin 2024/40**

(21) Application number: **22916352.2**

(22) Date of filing: **27.10.2022**

(51) International Patent Classification (IPC):
**G02B 13/00** (2006.01)  **G02B 13/18** (2006.01)
**G02B 9/34** (2006.01)  **G03B 17/12** (2021.01)
**H04N 23/00** (2023.01)

(52) Cooperative Patent Classification (CPC):
**G02B 9/34; G02B 13/00; G02B 13/18; G03B 17/12; H04N 23/00**

(86) International application number:
**PCT/KR2022/016551**

(87) International publication number:
**WO 2023/128198 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.12.2021 KR 20210188108**
**14.01.2022 KR 20220005683**

(71) Applicant: **Samsung Electronics Co., Ltd.**
**Suwon-si, Gyeonggi-do 16677 (KR)**

(72) Inventor: **LEE, Yongjae**
**Suwon-si Gyeonggi-do 16677 (KR)**

(74) Representative: **Gulde & Partner**
**Patent- und Rechtsanwaltskanzlei mbB**
**Wallstraße 58/59**
**10179 Berlin (DE)**

(54) **LENS ASSEMBLY AND ELECTRONIC DEVICE COMPRISING SAME**

(57) According to an embodiment of the present disclosure, a lens assembly and/or an electronic device comprising same, comprise at least four lenses which are sequentially arranged from an object side toward an image sensor side along an optical axis direction, wherein a first lens arranged at the first position from the object side, from among the at least four lenses, has a positive refractive power and a second lens arranged at the second position from the object side, from among the at least four lenses, has a negative refractive power, and thus, the miniaturization can be easily carried out and superior telescopic performance can be provided. Various other embodiments are possible.

FIG. 5

Processed by Luminess, 75001 PARIS (FR)

EP 4 439 146 A1

**Description**

[Technical Field]

An embodiment of the disclosure relates to a lens assembly, for example, a lens assembly including a plurality of lenses and an electronic device including the same.

[Background Art]

Optical devices, for example, cameras capable of capturing images or videos have been widely used, and digital cameras and video cameras with solid-state image sensors such as charge-coupled devices (CCDs) or complementary metal-oxide semiconductors (CMOS) have become common in recent years. Optical devices with solid-state image sensors (CCDs or CMOSs) have been gradually replacing film-based optical devices because they allow for easier storage, duplication, and movement of images than film-based optical devices.

Recently, a plurality of optical devices, for example, two or more selected ones of a close-up camera, a telephoto camera, and/or a wide-angle camera have been mounted in a single electronic device to improve the quality of a captured image and provide various visual effects to the captured image. For example, a plurality of cameras with different optical characteristics may be used to obtain images of a subject and synthesize them to obtain a high-quality captured image. As electronic devices such as mobile communication terminals or smartphones are equipped with a plurality of optical devices (e.g., cameras) and thus obtain high-quality captured images, they are gradually replacing electronic devices specialized for a shooting function, such as digital compact cameras, and are expected to replace high-performance cameras such as digital single-lens reflex cameras (e.g., DSLRs) in the future.

The above information is presented as background information only to assist with an understanding of the disclosure. No determination has been made, and no assertion is made, as to whether any of the above might be applicable as prior art with regard to the disclosure.

[Detailed Description of the Invention]

[Technical Problem]

A single miniaturized electronic device may include a standard camera, a wide-angle or ultra-wide-angle camera, and/or a telephoto camera to obtain multiple images of a single subject, synthesize them, and thus obtain a high-quality image. Compared to a wide-angle camera or a close-up camera, a telephoto camera may have a small field of view and a long focal length. For example, the telephoto camera may have a greater total lens length than the wide-angle camera or the close-up camera, and include a space or section in which lens(es) may move for continuous zooming, which may make it difficult to mount the telephoto camera in the miniaturized electronic device.

An embodiment of the disclosure is intended to address at least the above-mentioned problems and/or disadvantages and to provide at least the advantages described below. Accordingly, an embodiment of the disclosure may provide a lens assembly that has excellent telephoto performance by having a small field of view of approximately 15 degrees or less, and/or an electronic device including the same.

An embodiment of the disclosure may provide a lens assembly having improved design freedom in an arrangement direction of lenses by including an optical member that refracts or reflects externally incident light, and/or an electronic device including the same.

Additional aspects according to embodiments will be presented in the following detailed description, and will become apparent, in part, from the description or may be understood from an embodiment of the presented implementation.

[Technical Solution]

According to an embodiment of the disclosure, a lens assembly and/or an electronic device including the same includes at least four lenses sequentially arranged along a direction of an optical axis from an object side to an image sensor side. A first lens disposed first from the object side among the at least four lenses has a positive refractive power, and a second lens disposed second from the object side among the at least four lenses has a negative refractive power, and the lens assembly satisfies [Conditional Expression 1], [Conditional Expression 2], and [Conditional Expression 3] below,

[Conditional Expression 1]

$$-10 \le \frac{L2R1}{L1R1} < 0$$

[Conditional Expression 2]

$$60 \le Vd1 \le 99$$

[Conditional Expression 3]

$$1 \le FOV \le 15$$

Herein, 'L2R1' is a radius of curvature of an object-side surface of the second lens, 'L1R1' is a radius of curvature of an object-side surface of the first lens, 'Vd1' is an abbe number of the first lens, and 'FOV' is a field of view of the lens assembly.

According to an embodiment of the disclosure, an electronic device includes at least four lenses sequentially arranged along a direction of an optical axis from an object side to an image sensor side, an image sensor aligned with the at least four lenses on the optical axis and configured to receive light focused or guided by the at least four lenses, and a processor configured to obtain an image based on light received from the image sensor. A first lens disposed first from the object side among the at least four lenses has a positive refractive power, and a second lens disposed second from the object side among the at least four lenses has a negative refractive power, and the electronic device satisfies [Conditional Expression 10] and [Conditional Expression 11].

[Conditional Expression 10]

$$0.5 \le \frac{G12}{t1} \le 10$$

[Conditional Expression 11]

$$1 \le FOV \le 15$$

Herein, 'G12' is a gap between the first lens and the second lens on the optical axis, 't1' is a thickness of the first lens on the optical axis, and 'FOV' is a field of view of the lens assembly.

[Advantageous Effects]

A lens assembly according to an embodiment of the disclosure may include at least four lenses, for example, four or five lenses, to facilitate miniaturization while having a small field of view of approximately 15 degrees or less, thereby providing good telephoto performance. In an embodiment, the lens assembly may have great design freedom in arrangement of the lenses by refracting or reflecting externally incident light using an optical member disposed closer to an object than a first lens disposed on an object side. For example, the lens assembly may be easily mounted in a miniaturized electronic device, while providing excellent telephoto performance. In addition, various other effects which are identified directly or indirectly herein may be provided.

[Brief Description of Drawings]

The above or other aspects, configurations, and/or advantages of various embodiments of the disclosure will be apparent from the following detailed description with reference to the accompanying drawings.

FIG. 1 is a block diagram illustrating an electronic device in a network environment according to various embodiments of the disclosure.

FIG. 2 is a block diagram illustrating an exemplary camera module.

FIG. 3 is a perspective view illustrating a front surface of an electronic device according to an embodiment of the disclosure.

FIG. 4 is a perspective view illustrating a rear surface of the electronic device of FIG. 3 according to an embodiment of the disclosure.

FIG. 5 is a configuration diagram illustrating a lens assembly according to an embodiment of the disclosure.

FIGS. 6A, 6B, and 6C are graphs depicting spherical aberration, astigmatism, and distortion rates of a lens assembly according to an embodiment of the disclosure.

FIG. 7 is a configuration diagram illustrating a lens assembly according to an embodiment of the disclosure.

FIGS. 8A, 8B, and 8C are graphs depicting spherical aberration, astigmatism, and distortion rates of a lens assembly according to an embodiment of the disclosure.

FIG. 9 is a configuration diagram illustrating a lens assembly according to an embodiment of the disclosure.

FIGS. 10A, 10B, and 10C are graphs depicting spherical aberration, astigmatism, and distortion rates of a lens assembly according to an embodiment of the disclosure.

FIG. 11 is a configuration diagram illustrating a lens assembly according to an embodiment of the disclosure.

FIGS. 12A, 12B, and 12C are graphs depicting spherical aberration, astigmatism, and distortion rates of a lens assembly according to an embodiment of the disclosure.

FIG. 13 is a configuration diagram illustrating a lens assembly according to an embodiment of the disclosure.

FIGS. 14A, 14B, and 14C are graphs depicting spherical aberration, astigmatism, and distortion rates of a lens assembly according to an embodiment of the disclosure.

FIG. 15 is a configuration diagram illustrating a lens assembly according to an embodiment of the disclosure.

FIG. 16 is a first side view illustrating the lens assembly viewed along a direction V1 of FIG. 15.

FIG. 17 is a second side view illustrating the lens assembly viewed along a direction V2 of FIG. 15.

FIG. 18 is a configuration diagram illustrating a lens assembly according to an embodiment of the disclosure.

Throughout the accompanying drawings, like reference numerals may be assigned to like parts, components, and/or structures.

[Mode for Carrying out the Invention]

The following description may be given with reference to the accompanying drawings to provide a comprehensive understanding of various implementations of the disclosure as defined by the claims and their equivalents. While a specific embodiment disclosed in the following description include various specific details intended to aid in understanding, it is contemplated that it is one of many embodiments. Accordingly, it will be apparent to those skilled in the art that various changes and modifications can be made to various implementations described herein without departing from the scope and spirit of the disclosure. In addition, a description of well-known functions and configurations will be avoided, for clarity and brevity.

The terms and words used in the following description and claims are not limited to their referential meanings, but may be used to clearly and consistently describe various embodiments of the disclosure. Accordingly, it will be apparent to those skilled in the art that the following description of various embodiments of the disclosure, which is intended to be in conformity with the claims, is provided solely for illustrative purposes, not for restrictive purposes.

Unless the context clearly dictates otherwise, it should be understood that the singular forms of "a," "an," and "the" include plural meanings. Thus, for example, a "component surface" may be meant to include one or more of the surfaces of a component.

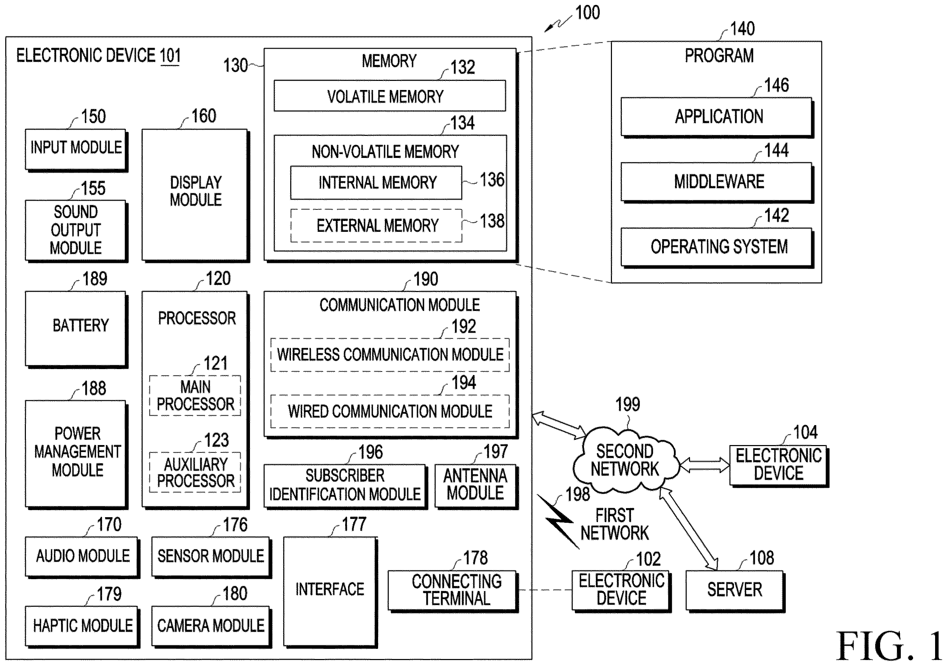

FIG. 1 is a block diagram illustrating an electronic device 101 in a network environment 100 according to an embodiment of the disclosure. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mm Wave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

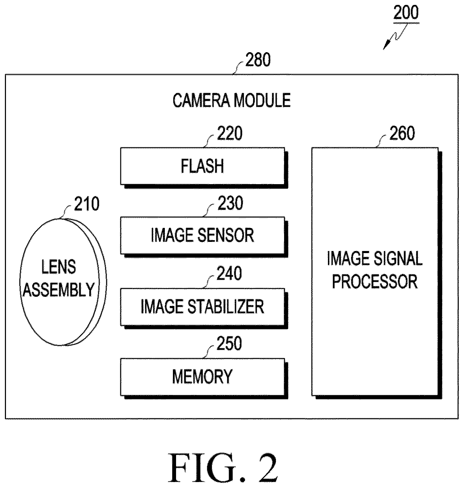

FIG. 2 is a block diagram 200 illustrating a camera module 280 (e.g., the camera module 180 in FIG. 1) according to an embodiment of the disclosure. Referring to FIG. 2, the camera module 280 may include a lens assembly 210, a flash 220, an image sensor 230, an image stabilizer 240, memory 250 (e.g., buffer memory), or an image signal processor 260. In an embodiment, the lens assembly 210 may include the image sensor 230. The lens assembly 210 may collect light emitted or reflected from an object whose image is to be taken. The lens assembly 210 may include one or more lenses. According to an embodiment, the camera module 280 may include a plurality of lens assemblies 210. In such a case, the camera module 280 may form, for example, a dual camera, a 360-degree camera, or a spherical camera. Some of the plurality of lens assemblies 210 may have the same lens attribute (e.g., view angle, focal length, auto-focusing, F-number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 280 or an electronic device 201 including the camera module 280. This allows compensating for at least part of a negative effect (e.g., image blurring) by the movement on an image being captured. According to an embodiment, the image stabilizer 240 may sense such a movement by the camera module 280 or an electronic device (e.g., the electronic device 101 in FIG. 1) using a gyro sensor (not shown) or an acceleration sensor (not shown) disposed inside or outside the camera module 280. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160 of FIG. 1. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of a memory (e.g., the memory 130 in FIG. 1) or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 280. An image processed by the image signal processor 260 may be stored back in the memory 250 for further processing, or may be provided to an external component (e.g., the memory 130, the display module 160, the electronic device 102, the electronic device 104, or the server 108 in FIG. 1) outside the camera module 280. According to an embodiment, the image signal processor 260 may be configured as at least part of a processor (e.g., the processor 120 in FIG. 1), or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed.

According to an embodiment, an electronic device (e.g., the electronic device 101 in FIG. 1) may include a plurality of camera modules 280 having different attributes or functions. In such a case, at least one of the plurality of camera modules 280 may form, for example, a wide-angle camera and at least another of the plurality of camera modules 280 may form a telephoto camera. Similarly, at least one of the plurality of camera modules 280 may form, for example, a front camera and at least another of the plurality of camera modules 280 may form a rear camera.

The electronic device according to embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Embodiments of the disclosure may be implemented as software (e.g., a program) including one or more instructions that are stored in a storage medium (e.g., internal memory or external memory) that is readable by a machine (e.g., an electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

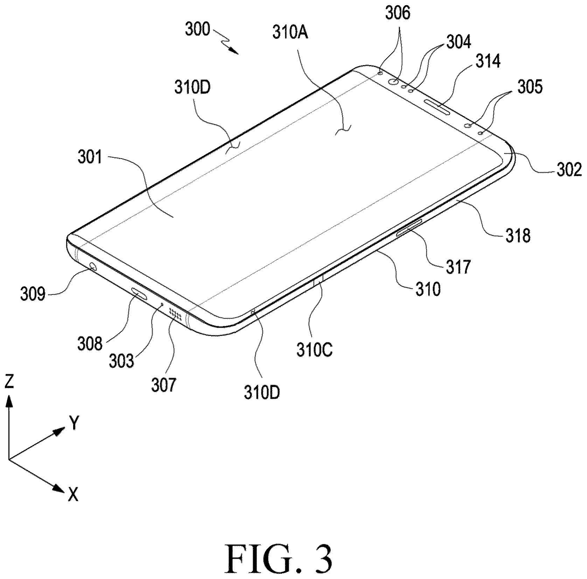

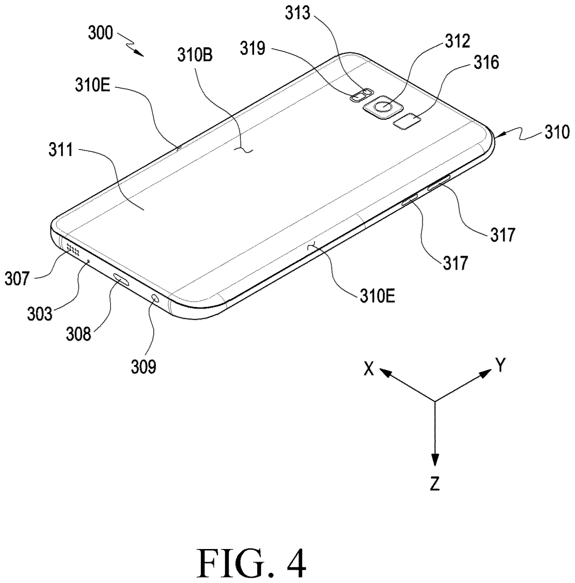

FIG. 3 is a perspective view illustrating a front surface of an electronic device 300 (e.g., the electronic device 101 in FIG. 1) according to an embodiment of the disclosure. FIG. 4 is a perspective view illustrating a rear surface of the electronic device 300 according to an embodiment of the disclosure.

Referring to FIGS. 3 and 4, the electronic device 300 (e.g., the electronic device 101 in FIG. 1) according to an embodiment may include a housing 310 which includes a first surface (or front surface) 310A, a second surface (or rear surface) 310B, and a side surface 310C surrounding a space between the first surface 310A and the second surface 310B. In an embodiment (not shown), the housing 310 may refer to a structure that forms a portion of the first surface 310A, the second surface 310B, and the side surfaces 310C of FIG. 3. According to an embodiment, at least a portion of the first surface 310A may be formed by a front plate 302 (e.g., a glass plate or polymer plate including various coating layers) which is at least partially substantially transparent. In an embodiment, the front plate 302 may be coupled to the housing 310 to form an inner space with the housing 310. In an embodiment, the term 'inner space' may refer to an interior space of the housing 310 that accommodates at least a portion of a display 301 to be described later or the display module 160 of FIG. 1.

According to an embodiment, the second surface 310B may be formed by a rear plate 311 which is substantially opaque. The rear plate 311 may be formed of, for example, coated or tinted glass, ceramic, a polymer, a metal (e.g., aluminum, stainless steel (STS), or magnesium), or a combination of at least two of these materials. The side surface 310C may be coupled to the front plate 302 and the rear plate 311 and formed by a side bezel structure (or "side member") 318 including a metal and/or a polymer. In an embodiment, the rear plate 311 and the side bezel structure 318 may be integrally formed and include the same material (e.g., a metallic material such as aluminum).

In the illustrated embodiment, the front plate 302 may include two first areas 310D, which are bent and extend seamlessly from the first surface 310A toward the rear plate 311, at both long edge ends of the front plate 302. In the illustrated embodiment (see FIG. 4), the rear plate 311 may include two second areas 310E, which are bent and extend seamlessly from the second surface 310B toward the front plate 302, at both long edge ends of the rear plate 311. In an embodiment, the front plate 302 (or the rear plate 311) may include only one of the first areas 310D (or the second areas 310E). In an embodiment, some of the first areas 310D or the second areas 310E may not be included. In these embodiments, when viewed from the sides of the electronic device 101, the side bezel structure 318 may have a first thickness (or width) on a side surface that does not include any of the above first areas 310D or second areas 310E (e.g., a side surface on which a connector hole 308 is formed), and a second thickness less than the first thickness on a side surface that includes the above first areas 310D or second areas 310E (e.g., a side surface on which a key input device 317 is disposed).

According to an embodiment, the electronic device 300 may include at least one of the display 301, audio modules 303, 307, and 314, sensor modules 304, 316, and 319, camera modules 305, 312, and 313 (e.g., the camera module 180 or 280 in FIG. 1 or 2), key input devices 317, a light emitting element 306, or connector holes 308 and 309. In an embodiment, the electronic device 101 may not be provided with at least one (e.g., a key input device 317 or the light emitting element 306) of the components or may additionally include other components.

The display 301 (e.g., the display module 160 in FIG. 1) may be visually exposed, for example, through a substantial portion of the front plate 302. In an embodiment, at least a portion of the display 301 may be exposed through the first surface 310A and the front plate 302 which forms the first areas 310D of the side surface 310C. In an embodiment, a corner of the display 301 may be formed substantially in the same shape as that of an adjacent periphery of the front plate 302. In an embodiment (not shown), a gap between the periphery of the display 301 and the periphery of the front plate 302 may be substantially equal to increase the visually exposed area of the display 301.

In an embodiment (not shown), a recess or an opening may be formed in a portion of a screen display area (e.g., an active area) or an area (e.g., an inactive area) outside the screen display area, and at least one of the audio module 314 (e.g., the audio module 170 in FIG. 1), the sensor module 304 (e.g., the sensor module 176 in FIG. 1), the camera module 305, or the light emitting element 306, which is aligned with the recess or the opening, may be included. In an embodiment (not shown), at least one of the audio module 314, the sensor module 304, the camera modules 305 (e.g., an under display camera (UDC)), a fingerprint sensor 316, or the light emitting element 306 may be included on a rear surface of the screen display area of the display 301. In an embodiment (not shown), the display 301 may be incorporated with or disposed adjacent to a touch sensing circuit, a pressure sensor capable of measuring the intensity (pressure) of a touch, and/or a digitizer that detects a magnetic field-based stylus pen. In an embodiment, at least some of the sensor modules 304 and 319 and/or at least some of the key input devices 317 may be disposed in the first areas 310D and/or the second areas 310E.

The audio modules 303, 307, and 314 may include a microphone hole 303 and speaker holes 307 and 314. A microphone for obtaining an external sound may be disposed in the microphone hole 303, and in an embodiment, a plurality of microphones may be disposed to detect the direction of a sound. The speaker holes 307 and 314 may include an external speaker hole 307 and a receiver hole 314 for calls. In an embodiment, the speaker holes 307 and 314 and the microphone hole 303 may be implemented as a single hole, or a speaker (e.g., a piezo speaker) may be included without the speaker holes 307 and 314.

The sensor modules 304, 316, and 319 may generate an electrical signal or data value corresponding to an internal operating state of the electronic device 300 or an external environmental state. The sensor modules 304, 316, and 319 may include, for example, a first sensor module 304 (e.g., a proximity sensor) and/or a second sensor module (not shown) (e.g., a fingerprint sensor), disposed on the first surface 310A of the housing 310, and/or a third sensor module 319 (e.g., a fiRM sensor) and/or a fourth sensor module 316 (e.g., a fingerprint sensor), disposed on the second surface 310B of the housing 310. The fingerprint sensors may be disposed on the second surface 310B as well as on the first surface 310A (e.g., the display 301) of the housing 310. The electronic device 300 may further include a sensor module which is not shown, for example, at least one of a gesture sensor, a gyro sensor, a barometric pressure sensor, a magnetic sensor, an acceleration sensor, a grip sensor, a color sensor, an IR sensor, a biometric sensor, a temperature sensor, a humidity sensor, or an illuminance sensor.

The camera modules 305, 312, and 313 may include a front camera module 305 disposed on the first surface 310A of the electronic device 101, and a rear camera module 312 and/or a flash 313 disposed on the second surface 310B. The camera modules 305 and 312 may include one or more lenses, an image sensor, and/or an ISP. The flash 313 may include, for example, a light emitting diode (LED) or a xenon lamp. In an embodiment, two or more lenses (an IR camera, a wide-angle lens, and a telephoto lens) and image sensors may be arranged on one surface of the electronic device 300.

The key input devices 317 may be disposed on the side surface 310C of the housing 310. In an embodiment, the electronic device 300 may not include some or any of the key input devices 317, and the key input devices 317 which are not included may be implemented in other forms such as soft keys on the display 301. In an embodiment, the key input devices may include the sensor module 316 disposed on the second surface 310B of the housing 310.

The light emitting element 306 may be disposed, for example, on the first surface 310A of the housing 310. The light emitting element 306 may provide, for example, state information about the electronic device 300 in the form of light. In an embodiment, the light emitting element 306 may provide, for example, a light source interworking with an operation of the front camera module 305. The light emitting element 306 may include, for example, an LED, an IR LED, and a xenon lamp.

The connector holes 308 and 309 may include a first connector hole 308 capable of accommodating a connector (e.g., a USB connector) for transmitting and receiving power and/or data to and from an external electronic device and/or a second connector hole (e.g., an earphone jack) 309 capable of accommodating a connector for transmitting and receiving an audio signal to and from an external electronic device.

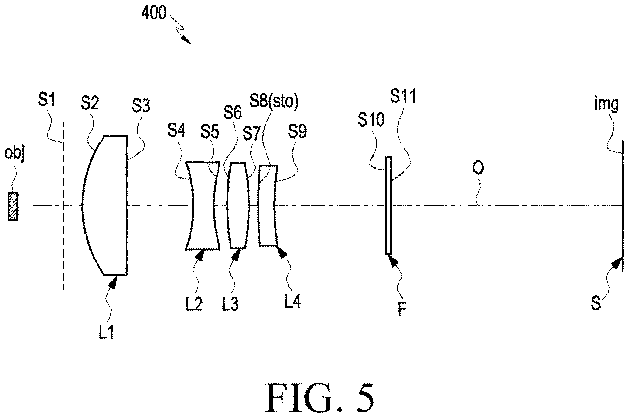

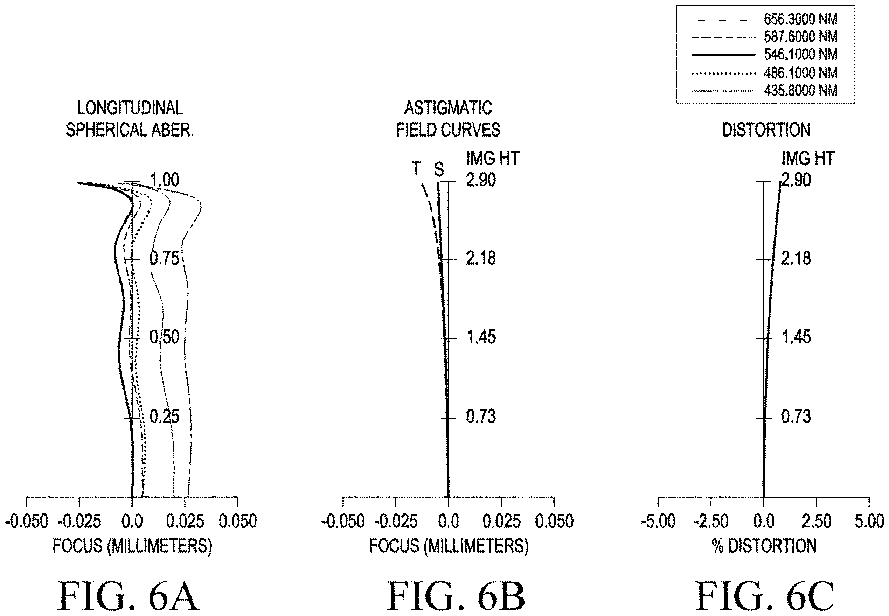

FIG. 5 is a configuration diagram illustrating a lens assembly 400 according to an embodiment of the disclosure. FIGS. 6A to 6C are graphs depicting spherical aberration, astigmatism, and distortion rates of the lens assembly 400 according to an embodiment of the disclosure.

FIG. 6A is a graph illustrating spherical aberration of the lens assembly 400 according to an embodiment of the disclosure, in which a horizontal axis represents coefficients of longitudinal spherical aberration, a vertical axis represents normalized distances from an optical axis, and variations of the longitudinal spherical aberration according to light wavelengths are illustrated. The longitudinal spherical aberration is shown, for example, for each of light having a wavelength of 656.3000 nanometers (NM) (e.g., red), light having a wavelength of 587.6000NM (e.g., yellow), light having a wavelength of 546.1000NM, light having a wavelength of 486.1000NM (e.g., blue), and light having a wavelength of 435.8000NM. FIG. 6B is a graph depicting astigmatism of the lens assembly 400 according to an embodiment of the disclosure, for light having a wavelength of 546.1000NM, in which 'S' denotes a sagittal plane and 'T' denotes a tangential plane. FIG. 6C is a graph depicting distortion rates of the lens assembly 400 according to an embodiment of the disclosure, for light having a wavelength of 546.1000NM.

Referring to FIGS. 5 to 6C, the lens assembly 400 (e.g., the lens assembly 210 and/or the image sensor 230 in FIG. 2) according to an embodiment of the disclosure may include a plurality of (e.g., at least four) lenses L1, L2, L3, and L4, an IR blocking filter F, and/or an image sensor S (e.g., an imaging plane img or the image sensor 230 in FIG. 2). According to an embodiment, the IR blocking filter F and/or the image sensor S or 230 may be described as a separate component from the lens assembly 400. For example, the IR blocking filter F and/or the image sensor S or 230 may be mounted on an electronic device (e.g., the electronic device 101, 102, 104, or 300 in FIG. 1 or 3) or an optical device (e.g., the camera module 180 or 280 in FIG. 1 or 2), and the plurality of lenses L1, L2, L3, and L4 included in the lens assembly 400 may be mounted on the electronic device or the optical device, in alignment with the IR blocking filter F and/or the image sensor S or 230 on an optical axis O. In an embodiment, at least one of the lenses L1, L2, L3, and L4 may be reciprocated along the optical axis O, and the electronic device (e.g., the electronic device 101, 102, 104, or 300 in FIG. 1 or 3) or the processor 120 of FIG. 1 may perform focusing adjustment or focal length adjustment by reciprocating the at least one of the lenses L1, L2, L3, and L4. In an embodiment, the lens assembly 400 may be disposed as one of the camera modules 305, 312, and 313 in FIG. 3 or 4.

According to an embodiment, the plurality of lenses L1, L2, L3, and L4 may be made of a plastic material or a glass material and include a first lens L1, a second lens L2, a third lens L3, and/or a fourth lens L4 disposed sequentially along a direction of the optical axis O from the side of an object obj to the side of the image sensor S or 230 (e.g., the imaging plane img). For example, the lenses L1, L2, L3, and L4 may be aligned with the image sensor S or 230 on the optical axis O. The lenses L1, L2, L3, and L4 may each include an object-side surface and an image sensor-side surface. In describing the following embodiments, it is to be noted that no reference numerals are assigned to some of the object-side surface(s) and the image sensor-side surface(s) of the lenses L1, L2, L3, and L4, for simplicity of the drawings. In the following detailed description, reference numeral 'Sd' may be assigned to the object-side surface(s) or image sensor-side surface(s) of the lens(es), when a natural number 'd' is cited, and reference numerals which are not assigned to lens surfaces in the drawings will be readily understood from the tables described later with respect to lens data in the embodiments. In an embodiment, a lens surface to which a reference numeral is assigned, although not shown in the drawings, for example, a lens surface denoted by 'S I' may be described as an example. This lens surface may represent reference plane(s) referenced for the design of the lens assembly 400 or a surface on which a cover window is disposed, which is substantially non-refractive while transmitting light. In an embodiment, any selected one of the lens surfaces may also be labeled with 'STO', and the lens surface labeled with 'STO' may function as an aperture stop.

In the following detailed description, the shapes of the object-side or image sensor-side surfaces of the lenses L1, L2, L3, and L4 may be described with the term 'concave' or 'convex'. Such references to the shapes of the lens surfaces may describe the shape of a point intersecting with the optical axis O. When it is said that an 'object-side surface is concave', this may describe a shape in which the center of the radius of curvature of the object-side surface is located closer to the object than the object-side surface. When it is said that an 'object-side surface is convex', this may describe a shape in which the center of the radius of curvature of the object-side surface is located closer to the image sensor than the object-side surface. When it is said that an 'image sensor-side surface is concave', this may describe a shape in which the center of the radius of curvature of the image sensor-side surface is located closer to the image sensor than the image-sensor side surface. When it is said that an 'image sensor-side surface is convex', this may describe a shape in which the center of the radius of curvature of the image-sensor side surface is located closer to the object than the image sensor-side surface. For example, the object-side surface S2 of the first lens L1 may be understood to be convex, and the image sensor-side surface S5 of the second lens L2 may be understood to be concave, in FIG. 5.

According to an embodiment, the first lens L1 may have a positive refractive power, and at least one of the object-side surface S2 or the image sensor-side surface S3 may be convex. In an embodiment, at least one of the object-side surface S2 or the image sensor-side surface S3 of the first lens L1 may be a spherical surface. In the illustrated embodiment, the lens surfaces S2 and S3 of the first lens may be spherical surfaces. In an embodiment, the first lens L1 may be made of a glass material having an abbe number Vd1 (the abbe number of the first lens L1) equal to or greater than approximately 60 and equal to or less than approximately 99. For example, referring to the website "https://refractiveindex.info/" or "www.hoyaoptics.com/optical-glass", or referring to Modern Optical Engineering (3rd ed) (pages 178 to 183) by Warren J. Smith, the first lens L1 may be made of any one of an FCD1 material having an abbe number of 81.61, an FC5 material having an abbe number of 70.45, and/or a BSC7 material having an abbe number of 64.20. However, an embodiment of the disclosure is not limited to the exemplary glass material, and the first lens L1 may be fabricated of any other glass material having an abbe number of approximately 60 or greater. In an embodiment, as the first lens L1 has a greater abbe number, the configuration of the lens assembly 400 may be simplified, and aberration correction may be facilitated. However, when the first lens L1 has an abbe number greater than 99, its refraction index is smaller, which may make power distribution or positioning difficult and lead to vulnerability to impact.

According to an embodiment, the second lens L2, the third lens L3, and/or the fourth lens L4 may have an aspheric surface as at least one of the object-side surface or the image sensor-side surface. For example, the lens surfaces of the second lens L2, the third lens L3, and/or the fourth lens L4 may be aspheric, as illustrated in Table 1 and Table 2 to be described later. In an embodiment, the second lens L2 may have a negative refractive power and include a concave object-side surface S4, and the lens assembly 400 may satisfy the condition of [Equation 1] regarding the radius of curvature of the object-side surface S2 of the first lens L1 and the radius of curvature of the obj ect-side surface S4 of the second lens L2.

[Equation 1]

$$-10 \leq \frac{L2R1}{L1R1} < 0$$

Herein, 'L2R1' may be the radius of curvature of the object-side surface S4 of the second lens L2, and 'L1R1' may be the radius of curvature of the object-side surface S2 of the first lens L1. When the first lens L1 has a great abbe number Vd1 of approximately 60 or greater, and the lens assembly 400 satisfies the condition of [Equation 1], the lens assembly 400 may have a field of view (FOV) equal to or greater than approximately 1 degree and equal to or less than approximately 15 degrees. When the value of [Equation 1] becomes less than -10, the absolute value of the radius of curvature of the object-side surface S4 of the second lens L2 may increase, thus making aberration correction difficult, and when the value of [Equation 1] is a positive value (e.g., greater than 0), the object-side surface S4 of the second lens L2 may have a convex shape, thus making power distribution and positioning throughout the lens assembly 400 difficult.

According to an embodiment, regarding a gap between the first lens L1 and the second lens L2, the lens assembly 400 may satisfy the condition of [Equation 2].

[Equation 2]

$$\frac{Ftot}{G12} \leq 20$$

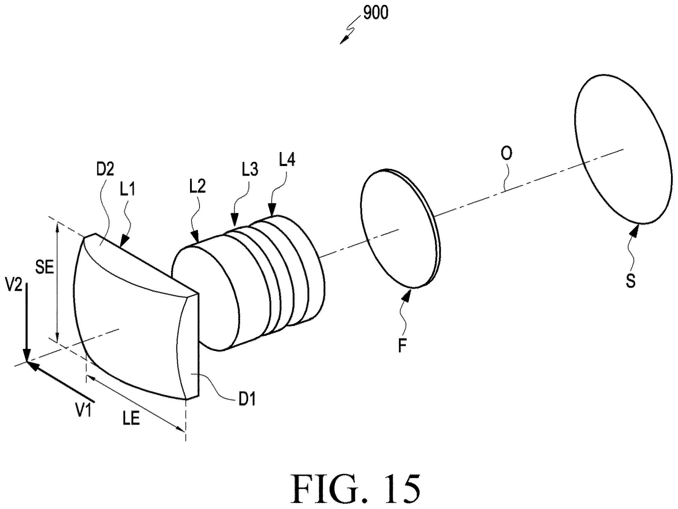

Herein, 'Ftot' may be a focal length of the lens assembly 400, and 'G12' may be the gap between the first lens L1 and the second lens L2 on the optical axis O. In an embodiment, a value calculated by [Equation 2] may be 5 or greater. When the calculated value of [Equation 2] is less than 5, the gap G12 between the first lens L1 and the second lens L2 may be too large to realize the optical performance of the lens assembly 400. When the gap G12 between the first lens L1 and the second lens L2 becomes smaller such that the value of [Equation 2] exceeds 20, the effective diameter of the second lens L2 may become larger, and the resulting increase of the total size of the lens assembly 400 may make it difficult to fabricate or manage lens(es). In an embodiment, when the gap G12 between the first lens L1 and the second lens L2 satisfies the condition of [Equation 2], an edge of the first lens L1 may have a D-cut shape rather than a circular shape, thereby enabling miniaturization of the lens assembly 400. This will be described in more detail with reference to FIGS. 15 to 17.

According to an embodiment, the lens assembly 400 may satisfy the condition of [Equation 3].

[Equation 3]

$$Vd2 \leq 40$$

Herein, 'Vd2' may represent the abbe number of the second lens L2, and when the second lens L2 has an abbe number greater than approximately 40, aberration correction (e.g., chromatic aberration correction) may be difficult. For example, when the abbe number of the second lens L2 satisfies the condition of [Equation 3], it may be easier to correct aberration in the lens assembly 400. In an embodiment, the abbe number of the second lens L2 may be 10 or greater in consideration of ease of aberration correction (e.g., chromatic aberration correction) in the lens assembly 400.

According to an embodiment, the lens assembly 400 may satisfy the condition of [Equation 4].

[Equation 4]

$$1.5 \leq NL \leq 1.72$$

Herein, 'NL' may be the refractive index of the last lens disposed from the object side or the refractive index of the first lens disposed from the image sensor side among the plurality of lenses L1, L2, L3, and L4, and in this embodiment, the refractive index of the fourth lens L4. When the lens (e.g., the fourth lens L4) disposed closest to the image sensor S has a refractive index less than 1.5, power distribution and positioning throughout the lens assembly 400 may be difficult, and it may also be difficult to decrease the total length of the lenses. When the lens (e.g., the fourth lens L4) disposed closest to the image sensor S has a refractive index greater than 1.72, aberration correction in the lens assembly 400 may be difficult. For example, when the condition of [Equation 4] is satisfied, power distribution and positioning, the decrease of the total lens length, and/or aberration correction may be facilitated in the lens assembly 400.

According to an embodiment, the lens assembly 400 may satisfy the condition of [Equation 5].

[Equation 5]

$$0.5 \leq \frac{G12}{t1} \leq 10$$

Herein, 'G12' may be the gap between the first lens L1 and the second lens L2 on the optical axis O, and 't1' may be the thickness of the first lens L1 along the optical axis O. When the ratio of the gap G12 between the first lens L1 and the second lens L2 to the thickness t1 of the first lens satisfies the condition of [Equation 5], the lens assembly 400 may have a small FOV, while being miniaturized. For example, when the value of [Equation 5] is greater than 10, the total lens length may be increased, making it difficult to miniaturize the lens assembly 400, and when the value of [Equation 5] is less than 0.5, the effective diameter of the second lens L2 may be increased. As described before, an increase in the effective diameter of the second lens L2 may increase the total size of the lens assembly 400 and/or make it difficult to fabricate or manage the lens(es).

[Embodiment 1]

According to an embodiment, the lens assembly 400 may have a focal length of approximately 27.2mm, an F-number of 4.447, a total lens length of 24.256mm, an image height of 2.756mm, and/or an FOV of 11.48 degrees. The total lens length may be understood, for example, as the distance from the object-side surface S2 of the first lens L1 to the imaging plane img, and the image height may be understood as a maximum distance from the optical axis O to an edge of the imaging plane img (e.g., a diagonal distance of the imaging plane img). The lens assembly 400 may satisfy at least some of the above-described conditions of the shape or refractive power of the lens(es) (e.g., lens surface(s)), the FOV, the abbe number of the first lens L1, or the equations described above and may be fabricated to the specifications listed in the following [Table 1].

[Table 1]

| Lens surface | Radius of curvature | Thickness or air gap | Effective focal length | Refractive index | Abbe number |
|---|---|---|---|---|---|
| Obj | infinity | infinity | | | |
| 1 | infinity | 0.00000 | | | |
| 2 | 5.52635 | 2.00487 | 10.930 | 1.49700 | 81.61 |
| 3 | -338.22968 | 2.98500 | | | |
| 4 | -5.59013 | 0.89043 | -4.640 | 1.63917 | 23.49 |
| 5 | 6.85717 | 0.63975 | | | |
| 6 | 11.59031 | 0.96991 | 8.717 | 1.66075 | 20.38 |
| 7 | -11.32167 | 0.39446 | | | |
| Sto | 13.80019 | 0.75000 | -416.334 | 1.54401 | 55.99 |
| 9 | 12.76098 | 5.00000 | | | |
| 10 | infinity | 0.21000 | infinity | 1.51680 | 64.2 |
| 11 | infinity | 10.40865 | | | |
| Img | infinity | 0.00247 | | | |

[Table 2] below lists the aspheric coefficients of the second, third, and fourth lenses L2, L3, and L4, and the definition of an aspheric surface may be derived from [Equation 6].

[Equation 6]

$$z=\frac{c'y^2}{1+\sqrt{1-(K+1)c'^2y^2}}+Ay^4+By^6+Cy^8+Dy^{10}+Ey^{12}+Fy^{14}+Gy^{16}+Hy^{18}+Jy^{20}$$

Herein, 'z' may represent distance(s) from the apex(es) of the lens(es) in the direction of the optical axis O, 'y' may represent a distance in a direction perpendicular to the optical axis O, 'c' may represent the reciprocal(s) of radius(es) of curvature at the apex(es) of the lens(es), 'K' may represent a Conic constant, and each of 'A', 'B', 'C', 'D', 'E', 'F', 'G', 'H', and 'J' may represent an aspheric coefficient. A radius of curvature may refer to, for example, a value indicating the degree of curvature at each point on a surface or curve.

[Table 2]

| Surf | S4 | S5 | S6 | S7 | S8 | S9 |
|------|-----|-----|-----|-----|-----|-----|
| Radius of curvature | - 5.59013E+00 | 6.85717E+00 | 1.15903E+01 | - 1.13217E+01 | 1.38002E+01 | 1.27610E+01 |
| K | -9.52829E-01 | 3.09618E+00 | 0.00000E+00 | 0.00000E+00 | 4.00481E-01 | 7.83231E-01 |
| A | 3.27736E-04 | 1.94989E-04 | -1.15665E-03 | -1.35654E-03 | -3.29975E-03 | -1.51864E-03 |
| B | 1.25708E-04 | 7.39766E-04 | 1.51097E-03 | 7.94307E-04 | -6.40598E-04 | -4.17148E-04 |
| C | 1.64843E-05 | -1.50911E-04 | -8.21889E-04 | -5.22152E-04 | 2.86853E-05 | -2.18979E-04 |
| D | -1.07305E-05 | 4.04477E-06 | 3.81510E-04 | 3.04190E-04 | 5.37675E-06 | 1.37147E-04 |
| E | 1.43739E-06 | 4.97054E-06 | -1.24578E-04 | -1.19205E-04 | 3.33280E-06 | -2.48270E-05 |
| F | 0.00000E+00 | -4.70859E-07 | 2.30355E-05 | 2.59339E-05 | -7.27153E-07 | -6.99543E-07 |
| G | 0.00000E+00 | 5.48371E-08 | -1.19793E-06 | -1.96844E-06 | -2.00214E-07 | 3.77590E-07 |
| H | 0.00000E+00 | 0.00000E+00 | -1.71974E-07 | -1.40068E-07 | 1.31037E-07 | 1.27347E-07 |
| J | 0.00000E+00 | 0.00000E+00 | 1.95883E-08 | 2.53087E-08 | -1.54021E-08 | -2.44260E-08 |

The calculated values of the above-described equations, the abbe number Vd1 of the first lens L1, and/or the FOV in [Embodiment 1] and/or later-described [Embodiment 2] to [Embodiment 5] are listed in [Table 3] below, by way of example.

[Table 3]

| | Equation 1 | Vd1 | FOV | Equation 2 | Equation 3 | Equation 4 | Equation 5 |
|------|-----|-----|-----|-----|-----|-----|-----|
| Embodiment 1 | -1.01 | 81.61 | 11.48 | 9.11 | 23.49 | 1.544 | 1.49 |
| Embodiment 2 | -2.19 | 70.44 | 10.69 | 9.26 | 21.05 | 1.6804 | 1.47 |
| Embodiment 3 | -1.13 | 64.2 | 10.62 | 10.88 | 21.54 | 1.544 | 1.79 |
| Embodiment 4 | -6.78 | 64.2 | 10.68 | 19.22 | 23.78 | 1.544 | 0.72 |
| Embodiment 5 | -2.29 | 81.61 | 10.68 | 9.43 | 23.89 | 1.650 | 1.44 |

[Embodiment 2]

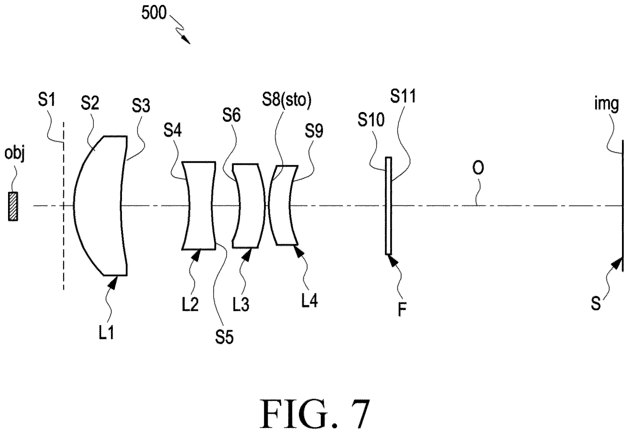

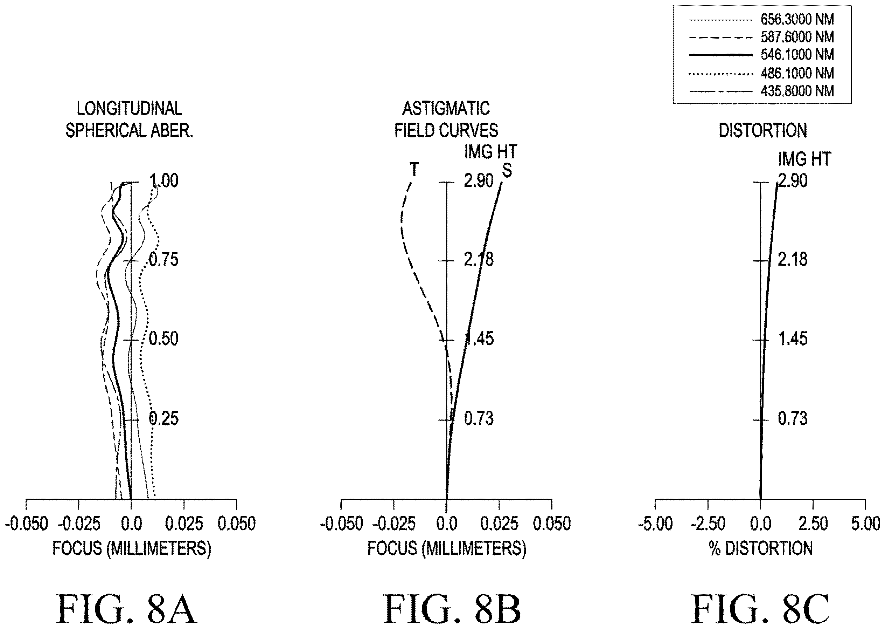

FIG. 7 is a configuration diagram illustrating a lens assembly 500 according to an embodiment of the disclosure. FIGS. 8A to 8C are graphs depicting spherical aberration, astigmatism, and distortion rates of the lens assembly 500 according to an embodiment of the disclosure.

The lens assembly 500 of FIG. 7 may have a focal length of approximately 27.19mm, an F-number of 4.385, a total lens length of 23.400mm, an image height of 2.556mm, and/or an FOV of 10.69 degrees. The lens assembly 500 may be fabricated to the exemplary specifications listed in the following [Table 4] and have aspheric coefficients listed in [Table 5], while satisfying at least some of the above-described conditions of the shape or refractive power of the lens(es) (e.g., lens surface(s)), the FOV, the abbe number of the first lens, or the equations.

[Table 4]

| Lens surface | Radius of curvature | Thickness or air gap | Effective focal length | Refractive index | Abbe number |
|---|---|---|---|---|---|
| obj | Infinity | infinity | | | |
| 1 | Infinity | 0.00000 | | | |
| 2 | 4.26503 | 1.99821 | 11.103 | 1.48749 | 70.44 |
| 3 | 16.81130 | 2.93686 | | | |
| 4 | -9.35570 | 1.00000 | -7.747 | 1.66100 | 21.05 |
| 5 | 12.09607 | 1.55094 | | | |
| 6 | -4.94143 | 1.20000 | 52.329 | 1.65034 | 21.54 |
| 7 | -4.73699 | 0.10000 | | | |
| sto | 4.67579 | 0.90000 | 65.190 | 1.68042 | 18.15 |
| 9 | 4.80913 | 4.93814 | | | |
| 10 | Infinity | 0.21000 | infinity | 1.51680 | 64.2 |
| 11 | Infinity | 8.56308 | | | |
| img | Infinity | 0.00247 | | | |

[Table 5]

| Lens surfaces | S4 | S5 | S6 | S7 | S8 | S9 |
|---|---|---|---|---|---|---|
| Radius of curvature | -9.35570E+00 | 1.20961E+01 | - 4.94143E+004.73699E+00 | -4.73699E+00 | 4.67579E+00 | 4.80913E+00 |
| K | -9.52829E-01 | -3.09618E+00 | 0.00000E+00 | 0.00000E+00 | 4.00481E-01 | 7.83231E-01 |
| A | -2.65636E-03 | 4.99810E-04 | -2.62807E-03 | -4.62285E-03 | -4.15291E-03 | -1.24986E-03 |
| B | 1.11109E-03 | 1.02247E-03 | -4.42307E-03 | 9.76567E-03 | 9.86930E-03 | -2.15222E-03 |
| C | -1.29385E-03 | -5.47869E-04 | 1.38678E-02 | 1.83769E-03 | 3.74861E-03 | 1.27496E-02 |
| D | 1.50242E-03 | 1.55946E-03 | -1.75147E-02 | -1.44367E-02 | -1.78449E-02 | -1.86164E-02 |
| E | -1.03802E-03 | -1.66070E-03 | 1.21259E-02 | 1.30336E-02 | 1.61316E-02 | 1.38115E-02 |
| F | 4.28009E-04 | 9.15606E-04 | -5.23526E-03 | -5.91540E-03 | -7.57729E-03 | -6.07265E-03 |
| G | -1.03910E-04 | -2.75149E-04 | 1.44212E-03 | 1.53248E-03 | 2.05956E-03 | 1.60787E-03 |
| H | 1.37303E-05 | 4.31424E-05 | -2.33848E-04 | -2.16881E-04 | -3.08226E-04 | -2.37240E-04 |
| J | -7.62884E-07 | -2.74891E-06 | 1.69698E-05 | 1.30661E-05 | 1.97298E-05 | 1.49694E-05 |

[Embodiment 3]

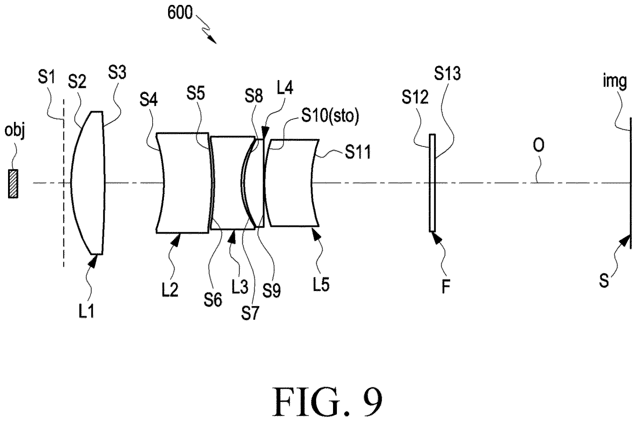

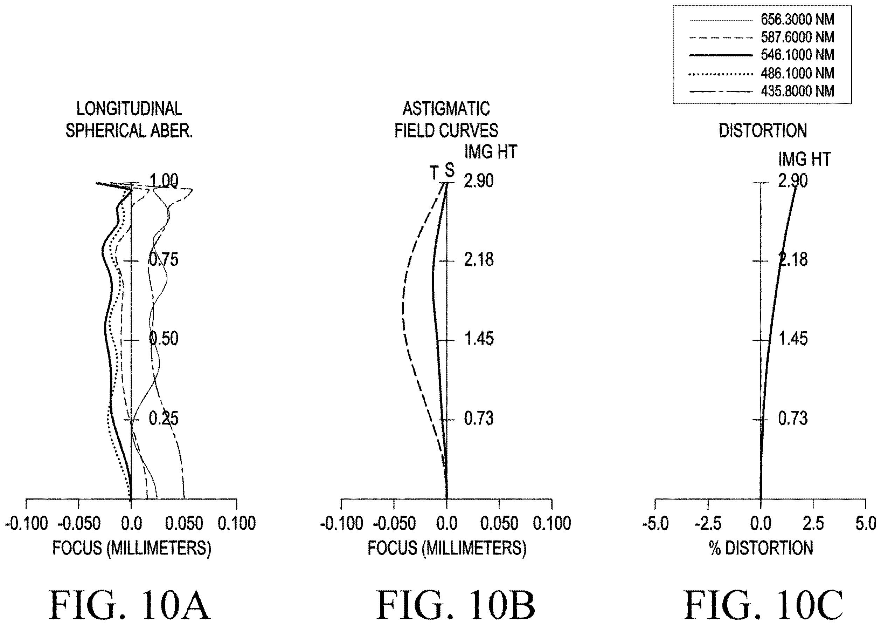

FIG. 9 is a configuration diagram illustrating a lens assembly 600 according to an embodiment of the disclosure. FIGS. 10A to 10C are graphs depicting spherical aberration, astigmatism, and distortion rates of the lens assembly 600 according to an embodiment of the disclosure.

The lens assembly 600 of FIG. 9 may have a focal length of approximately 27.19mm, and have an F-number of 4.532, a total lens length of 23.400mm, an image height of 2.556mm, and/or an FOV of 10.61 degrees. The lens assembly 600 in Embodiment 3 and/or a lens assembly 700 in later-described Embodiment 4 includes five lenses, and the condition of [Equation 4] may be applied to a fifth lens L5. The lens assembly 600 may be fabricated to the exemplary specifications listed in the following [Table 6] and have aspheric coefficients listed in [Table 7] and [Table 8], while satisfying at least some of the above-described conditions of the shape or refractive power of the lens(es) (e.g., lens surface(s)), the FOV, the abbe number of the first lens, or the equations.

[Table 6]

| Lens surface | Radius of curvature | Thickness or air gap | Effective focal length | Refractive index | Abbe number |
|---|---|---|---|---|---|
| obj | Infinity | infinity | | | |
| 1 | Infinity | 0.00000 | | | |
| 2 | 5.88929 | 1.39508 | 9.970 | 1.51680 | 64.2 |
| 3 | -38.99772 | 2.50000 | | | |
| 4 | -6.66560 | 2.00000 | -24.863 | 1.65034 | 21.54 |
| 5 | -12.59530 | 0.12256 | | | |
| 6 | -10.23911 | 1.12084 | -3.297 | 1.63917 | 23.49 |
| 7 | 2.80176 | 0.10000 | | | |
| 8 | 3.21064 | 0.83870 | 4.496 | 1.66075 | 20.38 |
| 9 | -41.92941 | 0.03000 | | | |
| sto | 5.20495 | 1.94687 | 92.658 | 1.54401 | 55.99 |
| 11 | 5.03478 | 4.98678 | | | |
| 12 | Infinity | 0.21000 | infinity | 1.51680 | 64.2 |
| 13 | Infinity | 8.14669 | | | |
| img | Infinity | 0.00247 | | | |

[Table 7]

| Lens surface | S4 | S5 | S6 | S7 |
|---|---|---|---|---|
| Radius of curvature | -6.66560E+00 | -1.25953E+01 | -1.02391E+01 | 2.80176E+00 |
| K | -1.11217E-01 | 0.00000E+00 | 2.17933E+00 | -2.63031E+00 |
| A | 1.45739E-03 | 1.28014E-02 | 1.36623E-02 | 5.67077E-03 |
| B | -2.33779E-03 | -3.00251E-02 | -3.18058E-02 | -2.20469E-02 |
| C | 2.88652E-03 | 3.83668E-02 | 4.32839E-02 | 4.57089E-02 |
| D | -2.24882E-03 | -3.38377E-02 | -3.97278E-02 | -4.55807E-02 |
| E | 1.14453E-03 | 2.05620E-02 | 2.46570E-02 | 2.52443E-02 |
| F | -3.71369E-04 | -8.13656E-03 | -9.91191E-03 | -8.13857E-03 |
| G | 7.34247E-05 | 1.96714E-03 | 2.43654E-03 | 1.48267E-03 |
| H | -8.04040E-06 | -2.62066E-04 | -3.30673E-04 | -1.33898E-04 |
| J | 3.73594E-07 | 1.46960E-05 | 1.89153E-05 | 3.95859E-06 |

[Table 8]

| Lens surface | S8 | S9 | S10 | S11 |
|---|---|---|---|---|
| Radius of curvature | 3.21064E+00 | -4.19294E+01 | 5.20495E+00 | 5.03478E+00 |
| K | -8.53345E-01 | 0.00000E+00 | -5.99473E-01 | 2.05656E+00 |
| A | 3.86206E-04 | -9.48612E-03 | -1.85215E-02 | -4.16152E-03 |
| B | -2.02068E-02 | 3.24076E-02 | 4.57800E-02 | 2.34079E-03 |
| C | 3.96601E-02 | -4.38374E-02 | -6.34044E-02 | -2.77613E-03 |
| D | -3.79041E-02 | 2.99747E-02 | 4.61375E-02 | 7.09630E-04 |
| E | 2.01205E-02 | -1.05716E-02 | -1.85320E-02 | 9.02624E-04 |
| F | -6.03508E-03 | 1.50879E-03 | 3.74217E-03 | -1.01442E-03 |
| G | 9.52886E-04 | 1.37774E-04 | -1.85057E-04 | 4.57458E-04 |
| H | -6.07752E-05 | -7.18960E-05 | -5.32781E-05 | -1.00086E-04 |
| J | -9.63047E-08 | 6.82099E-06 | 6.67300E-06 | 8.69273E-06 |

[Embodiment 4]

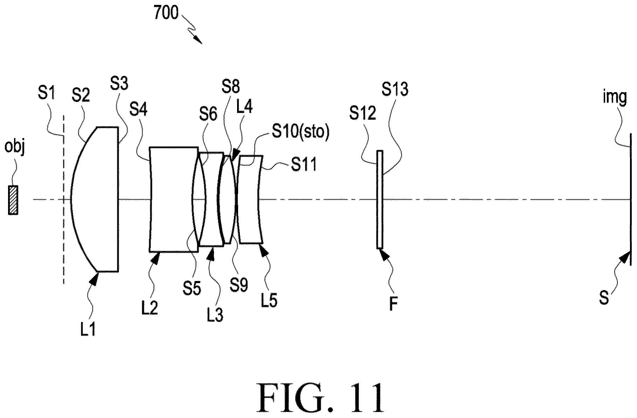

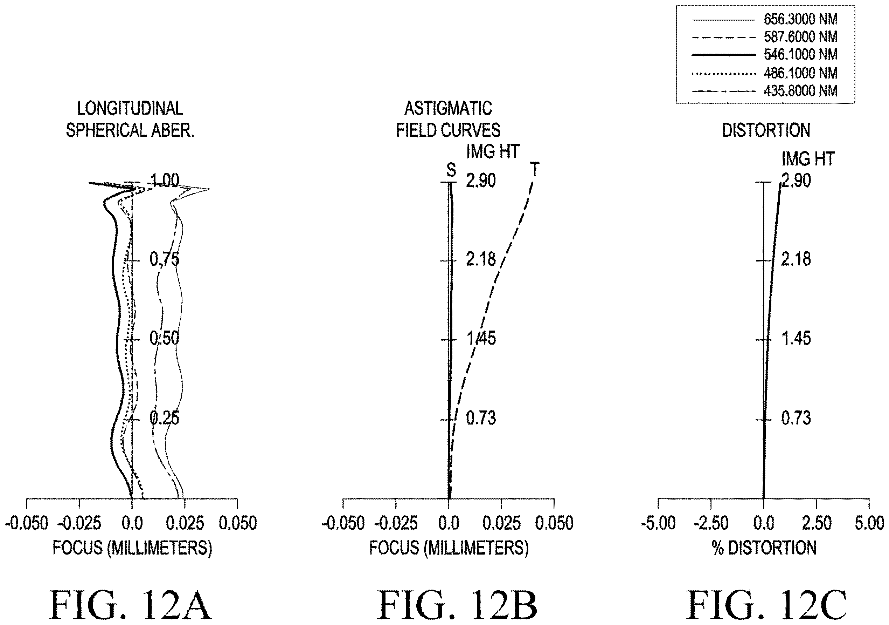

FIG. 11 is a configuration diagram illustrating the lens assembly 700 according to an embodiment of the disclosure. FIGS. 12A to 12C are graphs depicting spherical aberration, astigmatism, and distortion rates of the lens assembly 700 according to an embodiment of the disclosure.

The lens assembly 700 of FIG. 11 may have a focal length of approximately 27.186mm, and have an F-number of 4.531, a total lens length of 23.450mm, an image height of 2.556mm, and/or an FOV of 10.68 degrees. The lens assembly 700 may be fabricated to the exemplary specifications listed in the following [Table 9] and have aspheric coefficients listed in [Table 10], while satisfying at least some of the above-described conditions of the shape or refractive power of the lens(es) (e.g., lens surface(s)), the FOV, the abbe number of the first lens, or the equations.

[Table 9]

| Lens surface | Radius of curvature | Thickness or air gap | Effective focal length | Refractive index | Abbe number |
|---|---|---|---|---|---|
| obj | Infinity | infinity | | | |
| 1 | Infinity | 0.00000 | | | |
| 2 | 4.75304 | 1.97595 | 9.040 | 1.51680 | 64.2 |
| 3 | -300.50960 | 1.41534 | | | |
| 4 | -32.23192 | 1.71474 | -7.484 | 1.84666 | 23.78 |
| 5 | 8.17982 | 0.55003 | | | |
| 6 | -6.87458 | 0.50000 | -5.826 | 1.63917 | 23.49 |
| 7 | 8.54235 | 0.03000 | | | |
| 8 | 6.17767 | 0.74622 | 5.539 | 1.66075 | 20.38 |
| 9 | -8.78894 | 0.03000 | | | |
| sto | 8.79309 | 0.89595 | -215.470 | 1.54401 | 55.99 |
| 11 | 7.88739 | 5.00000 | | | |
| 12 | Infinity | 0.21000 | infinity | 1.51680 | 64.2 |
| 13 | Infinity | 10.37965 | | | |
| img | Infinity | 0.00247 | | | |

18

[Table 10]

| Lens surfaces | S6 | S7 | S8 | S9 | S10 | S11 |
|---|---|---|---|---|---|---|
| Radius of curvature | 6.87458E+00 | 8.54235E+00 | 6.17767E+00 | -8.78894E+00 | 8.79309E+00 | 7.88739E+00 |
| K | -1.09948E+00 | 6.78035E+00 | -1.63956E+00 | 1.76682E+00 | -1.03564E+00 | -8.54739E-01 |
| A | 6.85331E-05 | -6.35670E-03 | -7.93281E-03 | -2.87651E-03 | -3.87806E-03 | -1.43132E-03 |
| B | 4.26166E-03 | 4.76922E-02 | 4.66046E-02 | 8.84234E-03 | 1.92454E-03 | -1.41175E-03 |
| C | -8.16593E-03 | -1.05520E-01 | -1.01885E-01 | -1.72392E-02 | -4.80337E-03 | 1.67258E-03 |
| D | 7.29094E-03 | 1.18129E-01 | 1.14375E-01 | 1.87653E-02 | 5.22128E-03 | -2.43628E-03 |
| E | -3.63594E-03 | -7.67494E-02 | -7.43230E-02 | -1.20058E-02 | -3.54254E-03 | 2.12088E-03 |
| F | 1.04082E-03 | 3.02054E-02 | 2.91059E-02 | 4.59563E-03 | 1.54341E-03 | -1.05232E-03 |
| G | -1.60902E-04 | -7.10671E-03 | -6.77872E-03 | -1.02852E-03 | -4.12969E-04 | 2.97733E-04 |
| H | 1.06533E-05 | 9.20350E-04 | 8.64496E-04 | 1.22740E-04 | 6.10178E-05 | -4.50029E-05 |
| J | -5.10351E-08 | -5.04822E-05 | -4.64327E-05 | -5.91203E-06 | -3.77805E-06 | 2.83122E-06 |

[Embodiment 5]

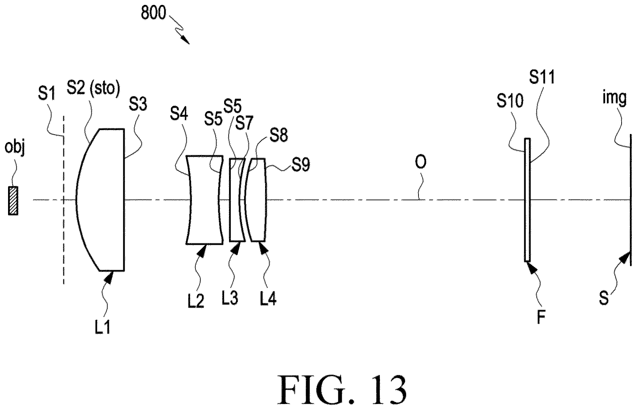

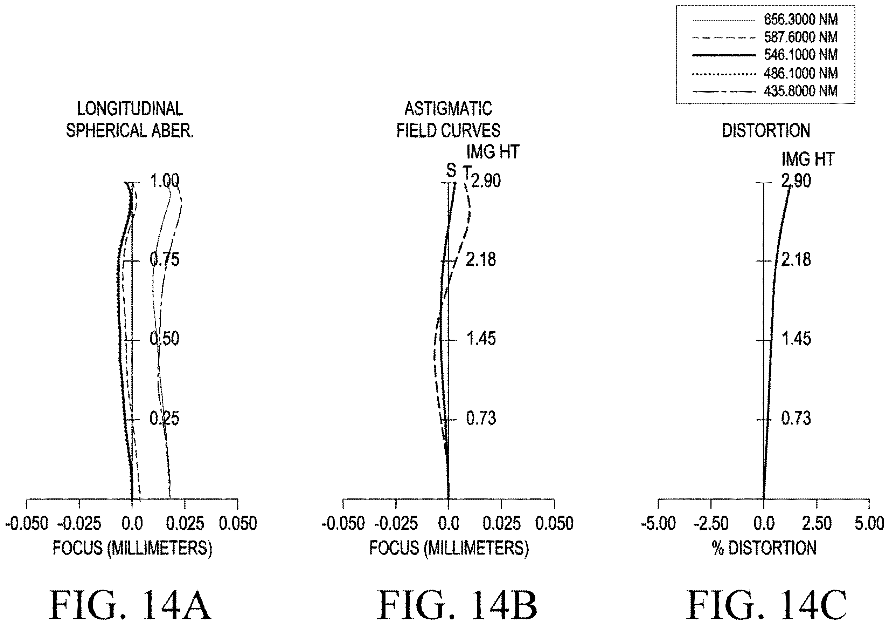

FIG. 13 is a configuration diagram illustrating a lens assembly 800 according to an embodiment of the disclosure. FIGS. 14A to 14C are graphs depicting spherical aberration, astigmatism, and distortion rates of the lens assembly 800 according to an embodiment of the disclosure.

The lens assembly 800 of FIG. 13 may have a focal length of approximately 27.15mm, and have an F-number of 4.525, a total lens length of 23.398mm, an image height of 2.556mm, and/or an FOV of 10.68 degrees. The lens assembly 800 may be fabricated to the exemplary specifications listed in the following [Table 11] and have aspheric coefficients listed in [Table 12], while satisfying at least some of the above-described conditions of the shape or refractive power of the lens(es) (e.g., lens surface(s)), the FOV, the abbe number of the first lens, or the equations.

[Table 11]

| Lens surface | Radius of curvature | Thickness or air gap | Effective focal length | Refractive index | Abbe number |
|---|---|---|---|---|---|
| obj | Infinity | infinity | | | |
| 1 | Infinity | 0.00000 | | | |
| sto | 5.32000 | 2.00000 | 10.723 | 1.49700 | 81.61 |
| 3 | 999.85677 | 2.88498 | | | |
| 4 | -12.18604 | 1.15572 | -6.756 | 1.63492 | 23.89 |
| 5 | 6.96871 | 0.51192 | | | |
| 6 | 32.69275 | 0.35000 | -9.825 | 1.61444 | 25.94 |
| 7 | 5.11396 | 0.26657 | | | |
| 8 | 6.69608 | 0.88831 | 6.862 | 1.65037 | 21.52 |
| 9 | -13.09504 | 11.00000 | | | |
| 10 | Infinity | 0.30000 | infinity | 1.51680 | 64.17 |
| 11 | Infinity | 4.04048 | | | |
| img | Infinity | 0.00000 | | | |

[Table 12]

| Lens surface | S4 | S5 | S6 | S7 | S8 | S9 |
|---|---|---|---|---|---|---|
| Radius of curvature | 1.21860E+01 | 6.96871E+00 | 3.26927E+01 | 5.11396E+00 | 6.69608E+00 | - 1.30950E+01 |
| K | 1.00000E+00 | 1.00000E+00 | 1.00000E+00 | 1.00000E+00 | 1.00000E+00 | 1.00000E+00 |
| A | -3.47621E-03 | -2.08927E-03 | -5.76809E-03 | -1.97547E-03 | 6.23645E-03 | 2.70144E-03 |
| B | 4.78549E-05 | -7.21908E-04 | -3.09148E-04 | -1.73071E-04 | -1.12217E-04 | 5.32213E-04 |
| C | 2.04711E-05 | -1.11644E-04 | -1.52201E-04 | 3.35631E-05 | 1.49492E-05 | -4.82584E-05 |
| D | 0.00000E+00 | 1.27442E-05 | -6.06614E-06 | -2.22794E-05 | 8.6573 5E-06 | 3.03779E-05 |
| E | 0.00000E+00 | 0.00000E+00 | 1.95517E-06 | 0.00000E+00 | 0.00000E+00 | 0.00000E+00 |
| F | 0.00000E+00 | 0.00000E+00 | 0.00000E+00 | 0.00000E+00 | 0.00000E+00 | 0.00000E+00 |
| G | 0.00000E+00 | 0.00000E+00 | 0.00000E+00 | 0.00000E+00 | 0.00000E+00 | 0.00000E+00 |
| H | 0.00000E+00 | 0.00000E+00 | 0.00000E+00 | 0.00000E+00 | 0.00000E+00 | 0.00000E+00 |
| J | 0.00000E+00 | 0.00000E+00 | 0.00000E+00 | 0.00000E+00 | 0.00000E+00 | 0.00000E+00 |

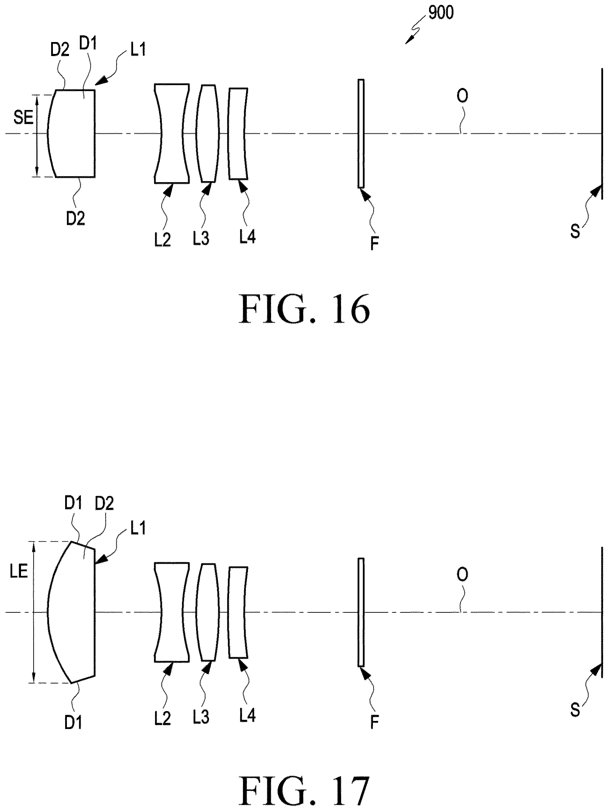

FIG. 15 is a configuration diagram illustrating a lens assembly 900 according to an embodiment of the disclosure. FIG. 16 is a first side view illustrating the lens assembly 900, viewed along a direction V1 of FIG. 15. FIG. 17 is a second side view illustrating the lens assembly 900, viewed along a direction V2 of FIG. 15.

In the lens assembly 900 of FIGS. 15 to 17, at least one (e.g., the first lens L1) of a plurality of lenses L1, L2, L3, and L4 may have a D-cut shape with at least a portion of an edge thereof being straight or planar, while the remaining lenses (e.g., the second lens L2, the third lens L3, and/or the fourth lens L4) may be substantially circular in shape. In this embodiment, the first lens disposed from the object side among the plurality of lenses L1, L2, L3, and L4, for example, the first lens L1 is shown as having a D-cut shape. According to an embodiment, in the lens assembly 900, the first lens (e.g., the first lens L1) on the object side among the lenses L1, L2, L3, and L4 may have a larger diameter than the other lenses, and as at least the first lens L1 has a D-cut shape among the lenses L1, L2, L3, and L4, the lens assembly 900 may be miniaturized.

According to an embodiment, the lens assembly 900 may differ from the preceding embodiments in the shape of the first lens L1, and satisfy at least some of the conditions of the above-described equations, the abbe number of the first lens, or the FOV. In an embodiment, when the lens assembly 900 satisfies the condition of [Equation 2] and/or [Equation 5] described above, the first lens L1 may easily have a D-cut shape or an elliptical shape. In an embodiment, when the lens assembly 900 satisfies the condition of [Equation 2] and/or [Equation 5] described above, the second, third, and fourth lenses L2, L3, and L4, and/or the fifth lens L5 of FIGS. 9 and 11 may be a plastic lens having a diameter corresponding to a short side SE of the first lens L1. For example, when the lens assembly 900 satisfies the condition of [Equation 2] and/or [Equation 5] described above, the lenses L1, L2, L3, and L4 may be easily molded or fabricated.

According to an embodiment, when viewed from the direction of the optical axis O, the first lens L1 may include a pair of short sides SE and a pair of long sides LE. For example, when viewed from the direction of the optical axis O, the first lens L1 may have a generally square shape with the short sides SE and the long sides LE arranged alternately at edges thereof. In an embodiment, when viewed from the direction of the optical axis O, the first lens L1 may have an elliptical shape, or have sections with different radiuses of curvature alternately arranged. For example, the short sides SE and the long sides LE may be arc-shaped rather than straight, and the short sides SE may have a smaller radius of curvature than the long sides LE.

According to an embodiment, the first lens L1 may include first side surfaces D1 and second side surfaces D2 arranged alternately with each other. For example, when viewed from a first direction V1 intersecting with the optical axis O, the first side surface(s) D1 may be disposed on the side of the short side(s) SE, and when viewed from a second direction V2 intersecting with the optical axis O and/or the first direction V1, the second side surface(s) D2 may be disposed on the side of the long side(s) LE. In an embodiment, the optical axis O, the first direction V1, and/or the second direction V2 may be substantially perpendicular to each other. In an embodiment, the optical axis O may be substantially parallel to an XY plane in FIG. 4, and the single sides SE or the second direction V2 may be substantially parallel to a Z axis in FIG. 4. According to an embodiment, the first side surface(s) D1 and the second side surface(s) D2 may be formed to be inclined with respect to the optical axis O. An inclination angle of the first side surface(s) D1 or the second side surface(s) D2 with respect to the optical axis O may be appropriately selected, taking into account a direction or angle at which externally incident light is refracted by the first lens L1.

According to an embodiment, in the case of a standard camera or a wide-angle camera, the optical axis of the lens assembly 900 may be disposed parallel to a thickness direction (e.g., a Z-axis direction in FIG. 3 or 4) of the electronic device (e.g., the electronic device 300 in FIG. 3 or 4). For example, as the standard camera or the wide-angle camera is mounted on the electronic device 300 having a thickness of approximately 10mm or less, the lenses L1, L2, L3, and L4 may be arranged sequentially along the thickness direction of the electronic device 400.

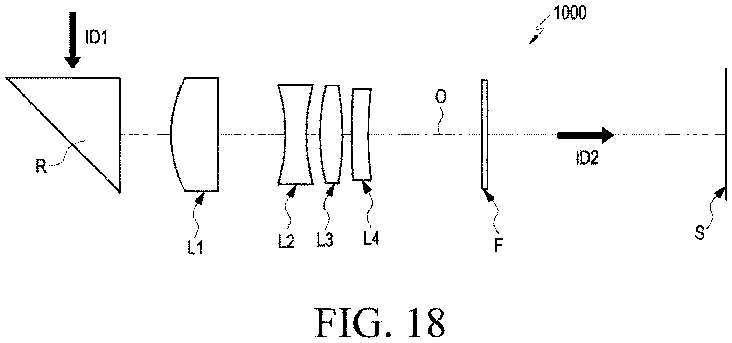

In the illustrated embodiment, in the case where the lens assembly 900 has an increased total lens length to achieve telephoto performance, when the optical axis O is disposed parallel to the thickness direction of the electronic device 300, at least a portion of the lens assembly 900 may protrude from the rear surface (e.g., the second surface 310B of FIG. 4) of the electronic device 300. As will be described with reference to FIG. 18, the lens assembly 900 (e.g., a lens assembly 1000 in FIG. 18) may further include an optical member (e.g., an optical member R in FIG. 18), thereby increasing design freedom in the arrangement direction of the lenses L1, L2, L3, and L4 in the electronic device 300. For example, when at least one (e.g., the first lens L1) of the lenses L1, L2, L3, and L4 has a D-cut shape or an elliptical shape, the short sides SE may be disposed parallel to the thickness direction (e.g., the Z-axis direction in FIG. 4) of the electronic device 300, and the optical axis O may be disposed to substantially intersect with the thickness direction of the electronic device 300. According to an embodiment, as the short sides SE of a lens (e.g., the first lens L1) having a D-cut shape or an elliptical shape are parallel to the thickness direction of the electronic device 300, the lens assembly 900 may be easily mounted on a slimmed-down electronic device, while providing improved telephoto performance.

FIG. 18 is a configuration diagram illustrating the lens assembly 1000 according to an embodiment of the disclosure.

Referring to FIG. 18, the lens assembly 1000 may satisfy at least some of the condition of the above-described equations, the abbe number of the first lens L1, or an FOV, and further include an optical member R that refracts or reflects light incident from the outside and directs it toward the first lens L1 and/or the image sensor S. For example, light from the outside may be incident on the optical member R along a first incident direction ID1, refracted or reflected by the optical member R, and travel along a second incident direction ID2. According to an embodiment, the optical member R may include a mirror or a prism. In an embodiment, when the lens assembly 1000 is disposed in an electronic device (e.g., the electronic device 300 in FIG. 4), the first incident direction ID1 may be substantially parallel to the thickness direction (e.g., the Z-axis direction in FIG. 4) of the electronic device 300, and the second incident direction ID2 may be substantially parallel to the XY plane in FIG. 4. In an embodiment, when the lens assembly 1000 includes the D-cut shaped (or elliptical) lens of FIGS. 15 to 17, the short sides (e.g., the short sides SE in FIG. 15) of the D-cut shaped lens may be disposed substantially parallel to the first incident direction ID1 or the Z-axis direction. For example, when the lens assembly 1000 includes the D-cut shaped lens (e.g., at least the first lens L1 among the plurality of lenses L1, L2, L3, and L4) and the optical member R, the lens assembly 1000 may be easily disposed in the miniaturized electronic device 300, while providing improved telephoto performance.

While not shown, the lens assembly 1000 may further include a second optical member disposed between the first lens (e.g., the fourth lens L4) disposed on the side of the image sensor S and the IR blocking filter F and/or between the IR blocking filter F and the image sensor S. The second optical member may refract or reflect light traveling along the second incident direction ID2 and direct it to the image sensor S along a third incident direction different from the second incident direction ID2. For example, when the second incident direction ID2 is substantially parallel to the XY plane of FIG. 4, the image sensor S may receive light refracted or reflected by the second optical member by being disposed inclined with respect to or substantially parallel to the XY plane.

According to an embodiment, when the electronic device 300 includes a high-performance, large-sized image sensor S, the quality of a captured image may be improved in the electronic device 300. When the image sensor S has an increased size and is disposed substantially parallel to the first incident direction ID1 as illustrated in FIG. 18, it may be difficult to mount the lens assembly 1000 on the slimmed-down electronic device 300. For example, the thickness of the electronic device 300 may increase due to the length or width of the image sensor S. According to an embodiment, the lens assembly 1000 may include at least one optical member R to provide design freedom in the arrangement direction of the lenses L1, L2, L3, and L4 or the arrangement direction of the image sensor S. Accordingly, the image sensor S may be easily mounted on the miniaturized and/or slimmed-down electronic device 300, even if the image sensor S becomes large in size.

As described above, according to an embodiment of the disclosure, a lens assembly (e.g., the lens assembly 400 in FIG. 5) and/or an electronic device (e.g., the electronic devices 101, 102, 104, and 300 in FIGS. 1 to 4) including the same may include at least four lenses (e.g., the lenses L1, L2, L3, and L4 in FIG. 5) sequentially arranged along a direction of an optical axis (e.g., the optical axis O in FIG. 5) from an object (e.g., the object obj in FIG. 5) side to an image sensor (e.g., the image sensor S in FIG. 5) side. A first lens (e.g., the first lens L1 in FIG. 5) disposed first from the object side among the at least four lenses may have a positive refractive power, and a second lens (e.g., the second lens L2 in FIG. 5) disposed second from the object side among the at least four lenses may have a negative refractive power. The lens assembly and/or the electronic device including the same may satisfy [Conditional Expression 1], [Conditional Expression 2], and [Conditional Expression 3] below.

[Conditional Expression 1]

$$-10 \leq \frac{L2R1}{L1R1} < 0$$

[Conditional Expression 2]

$$60 \leq Vd1 \leq 99$$

[Conditional Expression 3]

$$1 \leq FOV \leq 15$$

Herein, 'L2R1' may be a radius of curvature of an object-side surface (e.g., the surface indicated by 'S4' in FIG. 5) of the second lens, 'L1R1' may be a radius of curvature of an object-side surface (e.g., the surface indicated by 'S2' in FIG. 5) of the first lens, 'Vd1' may be an abbe number of the first lens, and 'FOV' may be an FOV of the lens assembly.
According to an embodiment, the lens assembly and/or the electronic device including the same may satisfy [Conditional Expression 4] below.

[Conditional Expression 4]

$$\frac{Ftot}{G12} \leq 20$$

Herein, 'Ftot' may be a focal length of the lens assembly, and 'G12' may be a gap between the first lens and the second lens on the optical axis.
According to an embodiment, the lens assembly and/or the electronic device including the same may [Conditional Expression 5] below.

[Conditional Expression 5]

$$Vd2 \leq 40$$

Herein, 'Vd2' may be an abbe number of the second lens.
According to an embodiment, the lens assembly and/or the electronic device including the same may [Conditional Expression 6] below.

[Conditional Expression 6]

$$1.5 \leq NL \leq 1.72$$

Herein, 'NL' may be a refractive index of a lens disposed last from the object side among the at least four lenses or a refractive index of a lens disposed first from the image sensor side.
According to an embodiment, the lens assembly and/or the electronic device including the same may [Conditional Expression 7] below.

[Conditional Expression 7]

$$0.5 \leq \frac{G12}{t1} \leq 10$$

Herein, 'G12' may be a gap between the first lens and the second lens on the optical axis, and 't1' may be a thickness of the first lens on the optical axis.

According to an embodiment, the lens assembly and/or the electronic device including the same may [Conditional Expression 8] below.

[Conditional Expression 8]

$$Vd2 \leq 40$$

Herein, 'Vd2' may be an abbe number of the second lens.

According to an embodiment, the lens assembly and/or the electronic device including the same may [Conditional Expression 9] below.

[Conditional Expression 9]

$$1.5 \leq NL \leq 1.72$$

Herein, 'NL' may be a refractive index of a lens disposed last from the object side among the at least four lenses or a refractive index of a lens disposed first from the image sensor side.

According to an embodiment, the first lens may include a glass material, and at least an object-side surface of the object-side surface or an image sensor-side surface (e.g., the surface indicated by 'S3' in FIG. 5) of the first lens may be convex.

According to an embodiment, the object-side surface and the image sensor-side surface of the first lens may be spherical surfaces.

According to an embodiment, the lens assembly and/or the electronic device including the same may further include an optical member (e.g., the optical member R in FIG. 18) disposed closer to an object than the first lens.

According to an embodiment, the optical member may be configured to reflect or refract external light incident from a direction intersecting with the optical axis (e.g., light incident along the direction indicated by 'ID1' in FIG. 18) to be incident on the first lens along the direction (e.g., the direction indicated y 'ID2' in FIG. 18) of the optical axis.

According to an embodiment, at least some of edges of at least the first lens among the at least four lenses may have a straight or flat shape.

According to an embodiment of the disclosure, an electronic device (e.g., the electronic devices 101, 102, 104, and 300 in FIGS. 1 to 4) may include at least four lenses (e.g., the lenses L1, L2, L3, and L4 in FIG. 5) sequentially arranged along a direction of an optical axis (e.g., the optical axis O in FIG. 5) from an object (e.g., the object obj in FIG. 5) side to an image sensor (e.g., the image sensor S in FIG. 5) side, an image sensor aligned with the at least four lenses on the optical axis and configured to receive light focused or guided by the at least four lenses, and a processor (e.g., the processor 120 in FIG. 1 or the image signal processor 260 in FIG. 2) configured to obtain an image based on light received from the image sensor. A first lens (e.g., the first lens L1 in FIG. 5) disposed first from the object side among the at least four lenses may have a positive refractive power, and a second lens (e.g., the second lens L2 in FIG. 5) disposed second from the object side among the at least four lenses may have a negative refractive power. The electronic device may satisfy [Conditional Expression 10] and [Conditional Expression 11].

[Conditional Expression 10]

$$0.5 \leq \frac{G12}{t1} \leq 10$$

[Conditional Expression 11]

$$1 \leq FOV \leq 15$$

Herein, 'G12' may be a gap between the first lens and the second lens on the optical axis, 't1' may be a thickness of the first lens on the optical axis, and 'FOV' is an FOV of the lens assembly.

According to an embodiment, the electronic device may satisfy [Conditional Expression 12] below.

[Conditional Expression 12]

$$Vd2 \leq 40$$

Herein, 'Vd2' may be an abbe number of the second lens.

According to an embodiment, the electronic device may satisfy [Conditional Expression 13] below.

[Conditional Expression 13]

$$1.5 \leq NL \leq 1.72$$

Herein, 'NL' may be a refractive index of a lens (e.g., the fourth lens L4 in FIG. 5 or the fifth lens L5 in FIG. 9) disposed last from the object side among the at least four lenses or a refractive index of a lens disposed first from the image sensor side.

According to an embodiment, the electronic device may satisfy [Conditional Expression 14] below.

[Conditional Expression 14]

$$60 \leq Vd1 \leq 99$$

Herein, 'Vd1' may be an abbe number of the first lens.

According to an embodiment, the electronic device may satisfy [Conditional Expression 15] below.

[Conditional Expression 15]

$$\frac{Ftot}{G12} \leq 20$$

Herein, 'Ftot' may be a focal length of the lens assembly, and 'G12' may be a gap between the first lens and the second lens on the optical axis.

According to an embodiment, the first lens may be fabricated of a glass material, and at least an object-side surface (e.g., the surface indicated by 'S2' in FIG. 5) of the object-side surface or an image sensor-side surface (e.g., the surface indicated by 'S3' in FIG. 5) thereof may be convex.

According to an embodiment, the object-side surface and the image sensor-side surface of the first lens may be spherical surfaces.

According to an embodiment, the electronic device may further include an optical member (e.g., the optical member R in FIG. 18) disposed closer to an object than the first lens.

According to an embodiment, the optical member may be configured to reflect or refract external light incident from a direction intersecting with the optical axis (e.g., light incident along the direction indicated by 'ID1' in FIG. 18) to be incident on the first lens along the direction the direction indicated by 'ID2' in FIG. 18) of the optical axis.

While the disclosure has been described by way of example with respect to various embodiments, it should be understood that the various embodiments are for illustrative purposes rather than limiting the disclosure. It will be apparent to those skilled in the art that various changes may be made in the form and detailed structure of the disclosure, including the appended claims and their equivalents, without departing from the overall scope of the disclosure.

**Claims**

1. A lens assembly comprising:

   at least four lenses sequentially arranged along a direction of an optical axis from an object side to an image sensor side,
   wherein a first lens disposed first from the object side among the at least four lenses has a positive refractive power, and a second lens disposed second from the object side among the at least four lenses has a negative refractive power, and
   wherein the lens assembly satisfies [Conditional Expression 1], [Conditional Expression 2], and [Conditional Expression 3] below,

   [Conditional Expression 1]

   $$-10 \leq \frac{L2R1}{L1R1} < 0$$

   [Conditional Expression 2]

   $$60 \leq Vd1 \leq 99$$

   [Conditional Expression 3]

   $$1 \leq FOV \leq 15$$

   where 'L2R1' is a radius of curvature of an object-side surface of the second lens, 'L1R1' is a radius of curvature of an object-side surface of the first lens, 'Vd1' is an abbe number of the first lens, and 'FOV' is a field of view of the lens assembly.

2. The lens assembly of claim 1, wherein the lens assembly satisfies [Conditional Expression 4] below,

   [Conditional Expression 4]

   $$\frac{Ftot}{G12} \leq 20$$

   where, 'Ftot' is a focal length of the lens assembly, and 'G12' is a gap between the first lens and the second lens on the optical axis.

3. The lens assembly of claim 1, wherein the lens assembly satisfies [Conditional Expression 5] below,

   [Conditional Expression 5]

   $$Vd2 \leq 40$$

   where 'Vd2' is an abbe number of the second lens.

4. The lens assembly of claim 1, wherein the lens assembly satisfies [Conditional Expression 6] below,

   [Conditional Expression 6]

   $$1.5 \leq NL \leq 1.72$$

where 'NL' is a refractive index of a lens disposed last from the object side among the at least four lenses or a refractive index of a lens disposed first from the image sensor side.

5. The lens assembly of claim 1, wherein the lens assembly satisfies [Conditional Expression 7] below,

[Conditional Expression 7]

$$0.5 \leq \frac{G12}{t1} \leq 10$$

where 'G12' is a gap between the first lens and the second lens on the optical axis, and 't1' is a thickness of the first lens on the optical axis.

6. The lens assembly of claim 5, wherein the lens assembly satisfies [Conditional Expression 8] below,

[Conditional Expression 8]

$$Vd2 \leq 40$$

where 'Vd2' is an abbe number of the second lens.

7. The lens assembly of claim 5, wherein the lens assembly satisfies [Conditional Expression 9] below,

[Conditional Expression 9]

$$1.5 \leq NL \leq 1.72$$

where 'NL' is a refractive index of a lens disposed last from the object side among the at least four lenses or a refractive index of a lens disposed first from the image sensor side.

8. The lens assembly of claim 1, wherein the first lens includes a glass material, and at least an object-side surface of the object-side surface or an image sensor-side surface thereof is convex.

9. The lens assembly of claim 8, wherein the object-side surface and the image sensor-side surface of the first lens are spherical surfaces.

10. The lens assembly of claim 1, further comprising an optical member disposed closer to an object than the first lens.

11. The lens assembly of claim 10, wherein the optical member is configured to reflect or refract external light incident from a direction intersecting with the optical axis to be incident on the first lens along the direction of the optical axis.

12. The lens assembly of claim 1, wherein at least some of edges of at least the first lens among the at least four lenses have a straight or flat shape.

13. An electronic device comprising:

a lens assembly of any one of claims 1 to 12;
an image sensor aligned with the at least four lenses on the optical axis and configured to receive light focused or guided by the at least four lenses; and
a processor configured to obtain an image based on light received from the image sensor.

14. The electronic device of claim 13, wherein the processor is configured to perform focus control or focal length control by reciprocating at least one of the at least four lenses along the direction of the optical axis.

15. The electronic device of claim 13, wherein when viewed from the direction of the optical axis, the first lens has a square shape with long sides and short sides arranged alternately at edges thereof.

FIG. 1

200

280

CAMERA MODULE

220

FLASH

210

LENS ASSEMBLY

230

IMAGE SENSOR

240

IMAGE STABILIZER

250

MEMORY

260

IMAGE SIGNAL PROCESSOR

# FIG. 2

FIG. 3

FIG. 4

FIG. 5

LONGITUDINAL
SPHERICAL ABER.

1.00

0.75

0.50

0.25

-0.050 -0.025  0.0  0.025  0.050
FOCUS (MILLIMETERS)

FIG. 6A

ASTIGMATIC
FIELD CURVES

T  S    IMG HT
2.90

2.18

1.45

0.73

-0.050 -0.025  0.0  0.025  0.050
FOCUS (MILLIMETERS)

FIG. 6B

DISTORTION

IMG HT
2.90

2.18

1.45

0.73

-5.00  -2.50   0.0   2.50   5.00
% DISTORTION

FIG. 6C

656.3000 NM
587.6000 NM
546.1000 NM
486.1000 NM
435.8000 NM

FIG. 7

LONGITUDINAL
SPHERICAL ABER.

1.00

0.75

0.50

0.25

-0.050 -0.025  0.0  0.025  0.050
FOCUS (MILLIMETERS)

FIG. 8A

ASTIGMATIC
FIELD CURVES
IMG HT

T                S
2.90

2.18

1.45

0.73

-0.050 -0.025  0.0  0.025  0.050
FOCUS (MILLIMETERS)

FIG. 8B

656.3000 NM
587.6000 NM
546.1000 NM
486.1000 NM
435.8000 NM

DISTORTION
IMG HT

2.90

2.18

1.45

0.73

-5.00 -2.50  0.0  2.50  5.00
% DISTORTION

FIG. 8C

FIG. 9

LONGITUDINAL
SPHERICAL ABER.

1.00

0.75

0.50

0.25

-0.100  -0.050   0.0    0.050   0.100
FOCUS (MILLIMETERS)

FIG. 10A

ASTIGMATIC
FIELD CURVES
IMG HT

T S   2.90

2.18

1.45

0.73

-0.100  -0.050   0.0    0.050   0.100
FOCUS (MILLIMETERS)

FIG. 10B

656.3000 NM
587.6000 NM
546.1000 NM
486.1000 NM
435.8000 NM

DISTORTION
IMG HT

2.90

2.18

1.45

0.73

-5.0   -2.5    0.0    2.5    5.0
% DISTORTION

FIG. 10C

EP 4 439 146 A1

FIG. 11

LONGITUDINAL
SPHERICAL ABER.

ASTIGMATIC
FIELD CURVES
IMG HT

DISTORTION
IMG HT

656.3000 NM
587.6000 NM
546.1000 NM
486.1000 NM
435.8000 NM

FOCUS (MILLIMETERS)

FOCUS (MILLIMETERS)

% DISTORTION

FIG. 12A

FIG. 12B

FIG. 12C

EP 4 439 146 A1

FIG. 13

FIG. 14A     FIG. 14B     FIG. 14C

900

D2
L1    L2    L3    L4

SE

V2

V1    LE    D1

O

F

S

FIG. 15

FIG. 16

FIG. 17

FIG. 18

## INTERNATIONAL SEARCH REPORT

| International application No. |
| --- |
| **PCT/KR2022/016551** |

### A. CLASSIFICATION OF SUBJECT MATTER

**G02B 13/00**(2006.01)i; **G02B 13/18**(2006.01)i; **G02B 9/34**(2006.01)i; **G03B 17/12**(2006.01)i; **H04N 23/00**(2023.01)i

According to International Patent Classification (IPC) or to both national classification and IPC

### B. FIELDS SEARCHED

Minimum documentation searched (classification system followed by classification symbols)

G02B 13/00(2006.01); G02B 13/02(2006.01); G02B 13/18(2006.01); G02B 13/22(2006.01); G02B 7/02(2006.01); G03B 17/12(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 제4렌즈(fourth lens), 망원(telephoto), 시야각(FOV), 초점거리(focal distance)

### C. DOCUMENTS CONSIDERED TO BE RELEVANT

| Category* | Citation of document, with indication, where appropriate, of the relevant passages | Relevant to claim No. |
| --- | --- | --- |
| X | JP 05-002132 A (ASAHI OPTICAL CO., LTD.) 08 January 1993 (1993-01-08) <br> See table 3, claim 1 and figure 5. | 1,3-9 |
| Y | | 2,10-15 |
| Y | JP 4566614 B2 (CANON INC.) 20 October 2010 (2010-10-20) <br> See table 1 and figure 1. | 2 |
| Y | KR 10-2021-0027185 A (SAMSUNG ELECTRO-MECHANICS CO., LTD.) 10 March 2021 (2021-03-10) <br> See paragraphs [0073]-[0181] and figures 1 and 17-20. | 10-15 |
| A | JP 09-068646 A (ASAHI OPTICAL CO., LTD.) 11 March 1997 (1997-03-11) <br> See paragraph [0033], table 1 and figure 1. | 1-15 |
| A | JP 2011-064989 A (OPTICAL LOGIC INC. et al.) 31 March 2011 (2011-03-31) <br> See claim 1 and figure 1. | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **31 January 2023** | **01 February 2023** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/016551**

| Patent document cited in search report | | | Publication date (day/month/year) | Patent family member(s) | | | Publication date (day/month/year) |
|---|---|---|---|---|---|---|---|
| JP | 05-002132 | A | 08 January 1993 | JP | 2978283 | B2 | 15 November 1999 |
| JP | 4566614 | B2 | 20 October 2010 | JP | 2005-316185 | A | 10 November 2005 |
| | | | | JP | 2007-316185 | A5 | 21 June 2007 |
| KR | 10-2021-0027185 | A | 10 March 2021 | CN | 112444947 | A | 05 March 2021 |
| | | | | CN | 112444947 | B | 03 January 2023 |
| | | | | CN | 214586194 | U | 02 November 2021 |
| | | | | KR | 10-2022-0165231 | A | 14 December 2022 |
| | | | | TW | 202109125 | A | 01 March 2021 |
| | | | | TW | 202212900 | A | 01 April 2022 |
| | | | | TW | I752609 | B | 11 January 2022 |
| | | | | US | 2021-0063686 | A1 | 04 March 2021 |
| JP | 09-068646 | A | 11 March 1997 | JP | 3713105 | B2 | 02 November 2005 |
| | | | | US | 5729390 | A | 17 March 1998 |
| JP | 2011-064989 | A | 31 March 2011 | CN | 102483513 | A | 30 May 2012 |
| | | | | CN | 102483513 | B | 17 September 2014 |
| | | | | JP | 5280326 | B2 | 04 September 2013 |
| | | | | US | 2012-0127584 | A1 | 24 May 2012 |
| | | | | US | 8842378 | B2 | 23 September 2014 |
| | | | | WO | 2011-033999 | A1 | 24 March 2011 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WARREN J. SMITH.** Modern Optical Engineering. 178-183